# EUROPEAN PATENT SPECIFICATION

(11) **EP 2 908 092 B1**
(45) Date of publication and mention of the grant of the patent: **26.08.2020**
(21) Application number: 15157071.0
(22) Date of filing: 31.12.2010
(51) Int. Cl.: G01B 11/24, B61K 9/08, B61L 23/04

(54) **Train with optical measuring implement**
Zug mit optischem Messgerät
Train avec implémentation de mesure optique

(30) Priority: 31.12.2009 NL 2004043
(43) Date of publication of application: 19.08.2015
(62) Divisional of application: 10197449.1
(73) Proprietor: VolkerRail Nederland BV, 4131 NJ Vianen (NL)
(72) Inventor: Schoone, Clemens, 4131 NJ Vianen (NL)
(74) Representative: Assendelft, Jacobus H.W.

(56) References cited:
- EP-A1- 0 007 227
- DE-A1-102007 015 257
- US-A- 5 140 776
- US-A- 5 793 492
- US-A1- 2003 072 001

## Description

The train with optical measuring implement is designed to measure the track or part of it, e.g. a rail or sleeper, e.g. for wear or deformation. One of the applications of the invention is the implement for monitoring a turnout (also called switch and crossing) of a railway or tramway line for wear and deformation.

A turnout or other part of a railway track is known to undergo wear and deformation with use, which must be corrected from time to time by e.g. grinding or replacement. The correct moment for maintenance is generally determined by periodic measurements of the parameters of one or more components of the turnout, such as rails, by using contact or non-contact or optical sensors, e.g. laser measurement known as triangulation.

With triangulation the component is struck with a laser light beam and a video camera has its optical axis inclined to the direction of the laser beam to read the shape generated by the interference between the laser beam and the component under examination.

The principle of the laser triangulation requires an orthogonal to the objects surface positioned area camera (CCD- or CMOS-matrix) to measure the lateral displacement or the deformation of a laser line projected in a known angle • (e.g. 60°) onto the objects surface. The elevation profile of interest is calculated from the deviation of the laser line from the zero position. From the deviation of the laser line propagating onto the objects surface, the elevation of the object is determined by the point of incidence.

The measuring implement must be kept clean under all circumstances. Since the measuring implement is typically located at low level, close to the ballast bed of the track, while the train moves at high speeds of 40 km/hour or more, dirt easily concentrates at the optical components, worsening the quality of the measurement.

It is known from patent document EP 0 007 227 A1 to use optical triangulation for rail inspection, wherein blowers produce air blasts across the fronts of lenses and cameras to prevent dust entering or interfering with these components. It is also known from patent document US 5,140,776 A to use a ventilation duct providing forced air to travel across the field of view of measuring cameras thereby cleaning the field of view from dust, dirt, snow and debris.

This invention relates to a device according to claim 1.

The invention also relates to a method for operating a train according to claim 10.

Presently preferred embodiments are shown in the attached drawing.

Fig. 1 and 2 show a schematic side view;

Fig. 3 shows a photographic side view of part of the train;

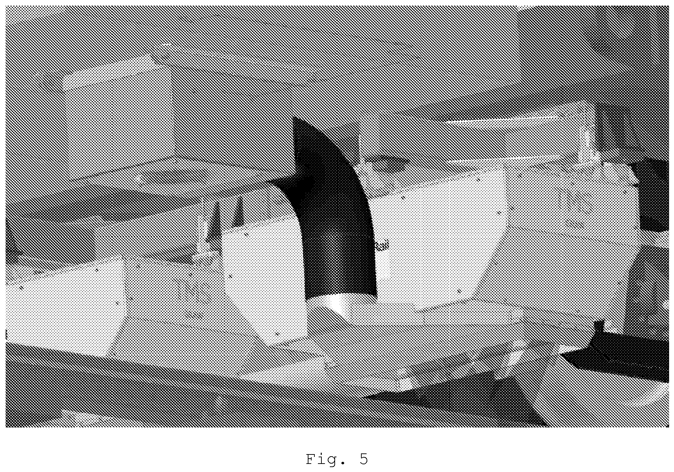

Fig. 4 and 5 show a photographic perspective from above and below of the part shown in fig. 3.

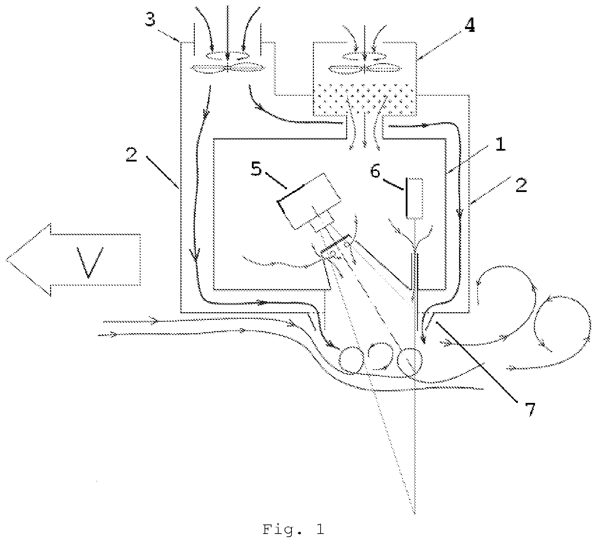

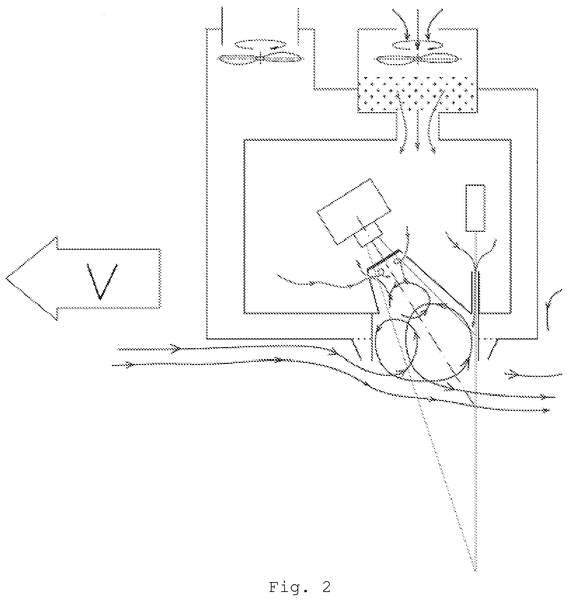

Fig. 1 and 2 show the at the level of the running wheels of the measuring train or at short distance above the rails located recessed housing 1 in sectional side view, with the blower 3 on and off, respectively. This housing contains the optical measuring implement with which the track is measured. The drawing clearly shows the contribution of the by the blower created downward airflow to keep the moving air due to wind and advancement of the train away from the windows through which the downward directed optical rays of the implement pass between the optical components (camera 5 and laser 6) of the implement and the track part (rail) to be measured. The windows are present in the recess of the housing. The optical components are housed in a double walled housing and are supplied by the air conditioner 4 (with blower and air filter) with conditioned air for cooling purposes, which conditioned air is discharged near or through the windows. Through the spacing between the double walls 2 air is supplied by the blower 3 and this cleaning air is discharged in a ring like manner around the recess. The ring shaped nozzle 7 through which the cleaning air is discharged, projects below the housing.

The flows of air from the air conditioner 4, the blower 3 and due to the advancement of the train are indicated by curved arrows in fig. 1 and 2. The direction of advancement of the train is indicated by the straight arrow V in fig. 1 and 2.

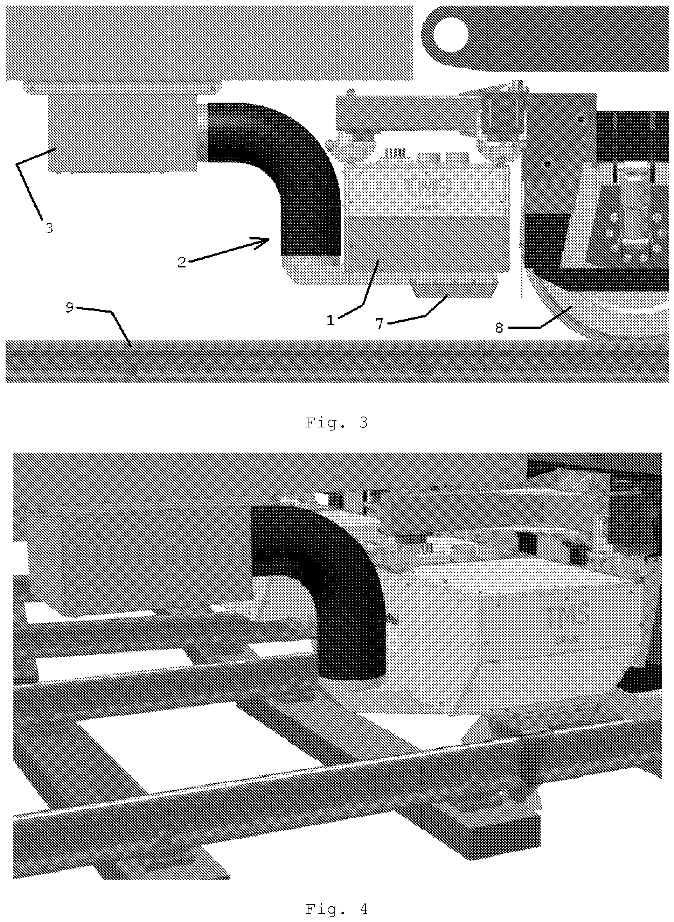

Fig. 3 shows a further embodiment wherein an air duct 2 extends from the blower 3 to the nozzle 7. The running wheel 8 of the train rides on top of the rail 9.

The invention can also be embodied differently. The housing can have a different shape, the windows and components can be located differently. The components can have different optical functions. The artificial air supply from the blower to the discharge nozzle can be through a channel different from the spacing in the double wall. The nozzle 7, or the airflow ejected by the nozzle 7, can be directed differently, e.g. horizontally in stead of downward.

## Claims

1. Train provided with a measuring housing (1), having one or more optical windows, with an optical measuring implement contained within the measuring housing at the level of the running wheels, designed to measure the rails of the track, and with a flow device to create an artificial airflow to keep environmental air away from one or more of the optical windows of the housing, which flow device contains a blower (3) to generate the artificial airflow which is discharged from one or more nozzles (7) of the flow device and wherein the airflow is created such that around a particular optical window of the measuring housing, a ring shaped artificial air screen is created.

2. Train according to claim 1, wherein the one or more nozzles (7), or the airflow ejected by the one or more nozzles (7), is directed horizontally or downward.

3. Train according to claim 1 or 2, wherein the particular optical window contains or provides the means through which an optical component (5, 6) of the measuring implement sends or receives its optical signals to or from, respectively, the track.

4. Train according to any of claims 1-3, wherein the airflow is created such that the particular optical window is covered by an artificial air blanket, simultaneously with the creation of a ring shaped air screen around the optical window.

5. Train according to any of claims 1-4, wherein the particular optical window is directed downward.

6. Train according to any of claims 1-5, provided with an air conditioner (4) connected to the measuring housing and designed to inject conditioned air into the preferably sealed inner space of the measuring housing.

7. Train according to any of claims 1-6 which measuring housing is only communicating with the environment through exhaust openings in or around the one or more optical windows, such that air is exhausted from said housing only through or around said exhaust openings.

8. Train according to any of claims 1-7, wherein a single nozzle (7) is present, encircling all of the one or more optical windows of the housing and directed downward to generate a downward directed air flow creating the downward directed ring shaped artificial air screen.

9. Train according to any of claims 1-8, wherein at least one or all nozzles (7) debouche at a level below the lower side of the measuring housing and thus below the level of said optical windows.

10. A method for operating a train provided with an optical measuring implement contained within a measuring housing at the level of the running wheels, designed to measure the rails of the track, and with a flow device to create an artificial airflow, wherein while the train advances, the artificial airflow is created and keeps environmental air away from optical windows of said measuring housing, said artificial airflow being created by a blower (3) of said flow device, and the by the blower (3) generated artificial airflow is discharged from one or more nozzles (7) of the flow device, wherein the airflow is created such that around an optical window of the measuring housing, a ring shaped artificial air screen is created.

## Patentansprüche

1. Zug ausgestattet mit einem Messgehäuse (1), mit einem oder mehreren optischen Fenster, mit ein optische Messeinrichtung aufgenommen innerhalb dem Messgehäuse auf der Ebene der Laufräder, angepasst, um die Schienen des Gleises zu messen, und mit eine Luftstromvorrichtung, um eine künstliche Luftstrom zu erzeugen um Umgebungsluft von eine oder mehrere optischen Fenster der Einrichtung weg zu halten, welche Luftstromvorrichtung ein Gebläse (3) enthalt um der künstliche Luftstrom zu erzeugen, der aus einer oder mehreren Düsen (7) der Luftstromvorrichtung ausgestoßen wird, und wobei die Luftstrom in solche weise erzeugt wird dass rundum ein bestimmtes optisches Fenster der Messeinrichtung, ein ringförmiges künstlichen Luftschirm erstellt wird.

2. Zug nach Anspruch 1, wobei die eine oder mehrere Düsen (7), oder die Luftstrom welche von die eine oder mehrere Düsen (7) ausgestoßen wird, Waagerecht oder nach unten gerichtet ist

3. Zug nach Anspruch 1 oder 2, wobei das bestimmte optische Fenster die Mitteln enthalt oder vorseht durch welche ein optische Komponente (5, 6) der Messvorrichtung seinen optischen Signale sendet oder empfangt zu und von der Gleis.

4. Zug nach einem der Ansprüche 1-3, wobei der Luftstrom erstellt ist sodass das bestimmte optische Fenster durch eine künstliche Luftdecke bedeckt ist, gleichzeitig mit das erstellen eines ringförmigen Luftschirm rundum des optischen Fensters.

5. Zug nach einem der Ansprüche 1-4, wobei das bestimmte optische Fenster nach unten gerichtet ist.

6. Zug nach einem der Ansprüche 1-5, wobei eine Klimaanlage (4) mit dem Messgehäuse verbunden ist und angepasst ist um klimatisierte Luft in den bevorzugt abgedichteten Innenraum des Messgehäuse zu injizieren.

7. Zug nach einem der Ansprüche 1-6 welches Messgehäuse nur mit den Umwelt Kommuniziert durch Abgasöffnungen im oder um das eine oder die mehreren optischen Fenster, so dass Luft nur aus dem Gehäuse erschöpft wird durch oder um herum die Abgasöffnungen.

8. Zug nach einem der Ansprüche 1-7, eine einzige Düse (7) ist vorhanden, rundum alle ein oder mehrere optische Fenster der Gehäuse und nach unten gerichtet um ein nach unten gerichteten Luftstrom zu erzeugen, welche die nach unten gerichteten ringförmiges künstlichen Luftschirm erstellt.

9. Zug nach einem der Ansprüche 1-8, wobei zumindest eine oder alle Düsen(7) ausmunden auf einem Niveau unterhalb der unteren Seite der Messgehäuse und damit unterhalb des Niveaus der optischen Fenster.

10. Verfahren zum betreiben einer Zug mit eine optische Messeinrichtung enthalten innerhalb ein Messgehäuse auf der Ebene der Laufräder, angepasst, um die Schienen des Gleises zu messen, und mit eine Luftstromvorrichtung, um eine künstliche Luftstrom zu erzeugen, wobei während der Zug fortbewegt, die künstliche Luftstrom erzeugt wird und Umgebungsluft von optischen Fenster der Einrichtung weg halt, welche künstliche Luftstrom erzeugt wird von einem Gebläse (3) der Luftstromvorrichtung, und die künstliche Luftstrom erzeugt von dem Gebläse (3) wird ausgestoßen von einer oder mehreren Düsen (7) der Luftstromvorrichtung, wobei die Luftstrom in solche weise erzeugt wird dass rundum ein optisches Fenster der Messeinrichtung, ein ringförmiges künstlichen Luftschirm erstellt wird.

## Revendications

1. Train pourvu d'un logement de mesure (1), ayant une ou plusieurs fenêtres optiques, avec un élément de mesure optique contenu à l'intérieur du logement de mesure au niveau des roues de roulement, conçu pour mesurer les rails de la voie, et avec un dispositif de flux pour créer un flux d'air artificielle pour garder l'air de l'environnement loin des fenêtres optique de ledit élément, lequel dispositif de flux contient un ventilateur (3) pour générer le flux d'air artificiel qui est déchargé à partir d'une ou plusieurs buses (7) du dispositif de flux, et dans lequel le flux d'air est créé de telle sorte que autour une fenêtre optique particulière du logement de mesure, un écran d'air artificielle en forme d'anneau est créé.

2. Train selon la revendication 1, dans lequel les une ou plusieurs buses (7), ou le flux d'air déchargé à partir d'une ou plusieurs buses (7), est dirigé horizontalement ou ver le bas.

3. Train selon la revendication 1 ou 2, dans lequel la fenêtre optique particulière contenant ou fournit le moyen par lequel un composant optique (5, 6) du dispositif de mesure envoie ou reçoit ses signaux optiques à et de la voie.

4. Train selon l'une quelconque des revendications 1-3, dans lequel le flux d'air est créé de telle sorte que la fenêtre optique particulière est couverte par une couche d'air artificielle, simultanément à la création d'un écran d'air en forme d'anneau autour de la fenêtre optique.

5. Train selon l'une quelconque des revendications 1-4, dans lequel la fenêtre optique particulière est dirigé vers le bas.

6. Train selon l'une quelconque des revendications 1-5, dans lequel un climatiseur (4) est relié au logement de mesure et est conçu pour injecter de l'air conditionné dans l'espace intérieur, de préférence étanche, du logement de mesure.

7. Train selon l'une quelconque des revendications 1-6, dans lequel le logement de mesure est seulement en communication avec l'environnement par ouvertures d'échappement dans ou autour de la une ou plusieurs fenêtres optiques, de telle sorte que l'air est évacué à partir dudit logement seulement à travers ou autour dudit ouvertures d'échappement.

8. Train selon l'une quelconque des revendications 1-7, dans lequel une buse (7) unique est présent, entourent tous les une ou plusieurs fenêtres optiques du logement et dirigé vers le bas pour créer un flux d'air dirigé vers le bas, en créant un écran d'air artificielle en forme d'anneau dirigé vers le bas.

9. Train selon l'une quelconque des revendications 1-8, dans lequel au moins une ou toutes les buses (7) débouché à un niveau en dessous du cote inférieur de la logement de mesure et donc en dessous du niveau desdites fenêtres optiques.

10. Procédé pour l'opération d'un train avec un élément de mesure optique contenu a l'intérieur d'une logement de mesure au niveau des roues de roulement, conçu pour mesurer les rails de la voie, et un dispositif de flux pour créer un flux d'air artificielle, dans lequel quant le train avancées, le flux d'air artificielle est créer et garder l'air de l'environnement loin des fenêtres optique de ledit élément, lequel flux d'air artificielle est créer par un ventilateur (3) de lequel dispositif de flux, et le flux d'air créer par le ventilateur (3) est déchargé à partir d'une ou plusieurs buses (7) du dispositif de flux, dans lequel le flux d'air est créé de telle sorte que autour une fenêtre optique du logement de mesure, un écran d'air artificielle en forme d'anneau est créé.
